# EUROPÄISCHE PATENTSCHRIFT

(11) **EP 1 189 800 B1**
(45) Veröffentlichungstag und Bekanntmachung des Hinweises auf die Patenterteilung: **02.01.2003**
(21) Anmeldenummer: 00940397.3
(22) Anmeldetag: 21.06.2000
(51) Int. Cl.: B62D 65/00

(54) **VORRICHTUNG UND VERFAHREN ZUM TRANSPORT VON LASTEN**
DEVICE AND METHOD FOR TRANSPORTING LOADS
PROCEDE ET DISPOSITIF POUR TRANSPORTER DES CHARGES

(30) Priorität: 21.06.1999 DE 19928335
(43) Veröffentlichungstag der Anmeldung: 27.03.2002
(73) Patentinhaber: Helmut Lehmer GmbH, 92436 Bruck/Opf. (DE)
(72) Erfinder: WAGNER, Wolfgang, D-7111 Waldenbuch (DE); WERNER, Marc, Oliver, D-73728 Esslingen (DE)
(74) Vertreter: Hössle Kudlek & Partner
(86) Internationale Anmeldenummer: EP0005750
(87) Internationale Veröffentlichungsnummer: WO00078594

(56) Entgegenhaltungen:
- DE-A- 3 445 844
- DE-A- 4 328 436
- DE-U- 29 918 523
- FR-A- 2 585 995

## Beschreibung

Die vorliegende Erfindung betrifft eine Vorrichtung zum Transport von Lasten nach dem Oberbegriff des Patentanspruchs 1 sowie ein entsprechendes Verfahren nach dem Oberbegriff des Patentanspruchs 11.

Aus der DE-OS 1 556 118 ist ein Traggestell zur maschinellen und freien Förderung von Automobilen bekannt. Das Traggestell ist über Laufkatzen an einer Tragschiene bewegbar aufgehängt. Durch eine entsprechende Anordnung von Gelenken einer Hinterrad- und einer Vorderradhalterung, wobei die Hinterradhalterung starr bis zur Vorderradhalterung verlängert ist, wird erreicht, daß auch bei einer Neigung von Traggestell und Fahrzeug die Hinterradhalterung immer parallel zum Fahrzeugboden ausgerichtet ist, während die Vorderradhalterung horizontal bleibt. Zum Be- und Entladen werden die Automobile in das Traggestell hinein- bzw. herausgefahren oder geschoben.

Aus der DE-OS 2 145 999 ist eine Autoschwebebahn bekannt. Kraftfahrzeuge samt Insassen können mit der Autoschwebebahn befördert werden, um so das Verkehrsaufkommen zu entlasten. Die Autoschwebebahn besteht aus pfeilergestützten Fahrschienen, an die elektrisch/magnetisch betriebene Gondeln aufgehängt sind. Die Gondeln werden mittels magnetischer Induktion angetrieben. Ein in Seitenschienen geführtes Gestänge oder eine zueinander beabstandete Doppelaufhängung wird zum Vermeiden von seitlichen Pendelbewegungen vorgeschlagen. Zum Be- und Entladen der Gondeln sind die pfeilergestützten Schienen an Be- bzw. Entladeorten tiefer geführt, so daß die Plattformen der Gondeln auf Straßenniveau abgesenkt werden und die Kraftfahrzeuge in die Gondel hinein- bzw. aus der Gondel herausfahren können.

Aus der DE 42 33 056 C2 ist eine Fördervorrichtung für Fahrzeugkarosserien mit einem Tragrahmen bekannt, der durch ortsfeste Führungsschienen gestützt und geführt wird. An den Tragrahmen sind Tragsockel zum Abstützen der Fahrzeugkarosserie vorgesehen und zum Anpassen an verschiedene Karosseriegrößen ein verschwenkbarer Anschlag sowie ein erster und ein zweiter fester Anschlag angebracht.

Aus der DE 36 42 431 ist eine Fördereinrichtung für Kraftfahrzeugkarosserien bekannt, bei der eine Trageinrichtung so gestaltet ist, daß Aufnahmen sowohl für eine Lackier- als auch für eine Montagetraverse vorgesehen sind.

Als nachteilig bei den aus dem Stand der Technik bekannten Fördereinrichtungen erweist sich, daß, beispielsweise im Falle zu transportierender Fahrzeuge oder Fahrzeugkarosserien, Umgebungseinflüsse nicht in wirksamer Weise ausgeschaltet werden können. Je nach Umgebung, durch welche die Fahrzeuge transportiert werden müssen, ist somit herkömmlicherweise ein aufwendiges Präparieren der Fahrzeuge für den Transport, beispielsweise durch Schutzfolien oder Auftragen von Wachsschichten, notwendig. Derartige Präparierungen müssen dann nach Abschluß des Transportes oder zu einem späteren Zeitpunkt aufwendig entfernt werden.

Aufgabe der Erfindung ist daher, einen von Umwelteinflüssen unabhängigen Transport von Lasten, insbesondere fertiggestellten oder teilfertiggestellten Fahrzeugen, in möglichst einfacher Weise zu ermöglichen.

Diese Aufgabe wird gelöst durch eine Vorrichtung mit den Merkmalen des Patentanspruchs 1 sowie ein Verfahren mit den Merkmalen des Patentanspruchs 11.

Es sei darauf hingewiesen, daß die erfindungsgemäße Vorrichtung eine einzige, oder auch eine beliebige Anzahl von Kabinen aufweisen kann. Die Formulierung beispielsweise des Patentanspruchs 1, nach der eine Mehrzahl von Kabinen vorgesehen ist, umfaßt also explizit also auch das Vorsehen nur einer Kabine, welche beispielsweise im Pendelbetrieb zwischen der ersten Station und der zweiten Station einsetzbar ist. Die Begriffe "allseitig abschließbar" bzw. "allseitig verschließbar" sind insbesondere in dem Sinne zu verstehen, daß die Kabine die zu transportierenden Lasten vollständig umfaßt bzw. umgibt. Die Begriffe "verschließbar" und "abschließbar" ohne den Zusatz "allseitig" sind unter anderem in dem Sinne zu verstehen, daß ein gewünschter Schutz einer zu transportierenden Last, beispielsweise gegen herabfallende Gegenstände oder herabtropfende Flüssigkeiten, möglich ist. Beispielsweise ist es denkbar, die zu transportierenden Lasten lediglich von oben und seitlich mit Kabinenwänden zu umgeben, so daß beispielsweise von unten ein Zugang zu der zu transportierenden Last ohne Öffnung der Kabine möglich ist.

Mit der erfindungsgemäßen Vorrichtung werden die zu transportierenden Lasten während des Transportes in vorteilhafter Art und Weise vor jedweden Umgebungseinflüssen geschützt. Dabei eignet sich die erfindungsgemäße Vorrichtung besonders, um Lasten über große Entfernungen sowohl im Freien als auch in geschlossenen Räumen zu transportieren, wobei insbesondere ein kontinuierlicher Transport ermöglicht wird.

Insbesondere können fertiggestellte Fahrzeuge inkl. Befüllung von einem Übergabebereich aus der Produktion an ein sogenanntes Kundencenter mit einem kontinuierlich laufenden Transportsystem unter Schutz vor jeglichen Umwelteinflüssen geliefert werden. Es wird somit ein vollkommen von Umgebungseinflüssen abgeschlossenes Transportsystem geschaffen, bei dem auch die Be- und Entladevorgänge keinen Umgebungseinflüssen ausgesetzt sind. Somit kann ein aufwendiges Präparieren der Fahrzeuge für den Transport, z.B. durch Schutzfolien oder Auftragen von Wachsschichten vermieden werden. Eine Reinigung von Verschmutzungen, die bei herkömmlichen Transporten auftreten können, ist nicht mehr notwendig.

Es sei in diesem Zusammenhang erwähnt, daß Produktionsbereich und Kundencenter grundsätzlich unterschiedlichen Anforderungen unterliegen. Bei Verwenden der erfindungsgemäßen Transportvorrichtung können Fahrzeuge im Produktionsbereich mit den dort vorhandenen Anlagen kundenfertig hergerichtet werden, ohne daß es Nacharbeiten im Kundencenter und somit entsprechender Einrichtungen bedarf. Da mit der erfindungsgemäßen Vorrichtung große Entfernungen zu überbrücken sind, ist es möglich Produktionsbereich und Kundencenter nicht nur organisatorisch sondern auch räumlich klar voneinander zu trennen. Kundencenter, beispielsweise für die unmittelbare Übergabe fertiggestellter Fahrzeuge vom Hersteller an den Kunden ohne Zwischenhändler, können an bevorzugten Standorten in Kundennähe vorgesehen werden und sind dabei über die erfindungsgemäße Transportvorrichtung mit dem Produktionsbereich in vorteilhafter Art und Weise verbunden. Die großflächigen Kabinenaußenseiten eignen sich außerdem als Werbeflächen.

Die erfindungsgemäße Transportvorrichtung kann aber auch im Produktionsbereich selbst, z.B. zum Transport von unlackierten Rohkarosserien, die weder Regen noch anderen Umgebungseinflüßen ausgesetzt sein sollen, oder aber in Bereichen außerhalb der Automobilindustrie eingesetzt werden, wobei das zu transportierende Gut generell vor Umgebungseinflüssen gleich welcher Art effektiv zu schützen ist. Es sei hier beispielsweise auf einen Gipskartonplattentransport auf Werksgeländen hingewiesen.

Gegenüber den bisher konventionell mit einer Fördererbrücke realisierten Anwendungsfällen ist gerade bei langen Strecken ein erheblicher Kostenvorteil zu erwarten, der während des Betriebs der Anlage durch sehr geringe Wartungs- und Instandhaltungskosten noch vergrößert wird.

Vorteilhafte Ausgestaltungen der Erfindung sind Gegenstand der Unteransprüche.

Zweckmäßigerweise weist die Fördereinrichtung ferner ein Tragwerk auf, wobei die Kabinen bzw. die wenigstens eine Kabine an dem Fahrwerk angebracht ist, das Fahrwerk durch Tragseile und/oder Tragschienen gestützt und geführt ist und über ein angetriebenes Zugseil bewegbar ist. Die Kabinen sind so mittels des Zugseiles durch stationäre Antriebsmittel bewegbar, so daß kabinenseitige Antriebe und damit ein kontinuierlicher Anschluß an eine äußere Energieversorgung vermieden werden können bzw. kann. Die Anzahl der notwendigen Antriebe zur Fortbewegung der Kabinen auf der Strecke zwischen erster und zweiter Station ist somit auf ein Minimum reduzierbar. Im allgemeinen ist zum Antrieb des Seiles ein Antriebsmotor notwendig, wobei zum automatischen Spannen des Zugseiles ein Spannantrieb vorzusehen ist. Weiterhin sind Steigungen und Gefälle zur Überwachung von Höhenunterschieden auf der Strecke ohne zusätzliche Einrichtungen wie Hubstationen usw. realisierbar. In die Streckenführung können auch Kurven eingearbeitet werden.

Es erweist sich als zweckmäßig, Seilkupplungsmittel vorzusehen, um das Fahrwerk mit den Kabinen in der ersten und/oder zweiten Station bezüglich des Zugseils an- bzw. abzukuppeln. Mit einem derartigen Seilkupplungsmechanismus ist ein flexibler Einsatz der erfindungsgemäßen Vorrichtung möglich.

Bei einer vorteilhaften Weiterbildung der Vorrichtung sind die Be- und/oder Entladeöffnungen an Stirn-, Breitseiten und/oder am Boden der Kabine vorgesehen. Dadurch ist ein flexibler Einsatz der Kabinen in unterschiedlich gestalteten Be- und Entladestationen möglich, da z.B. in Städtebereichen aufgrund baulicher Vorgaben eine bestimmte Art der Be- und Entladung, wie eine seitliche oder eine horizontale Be- und Entladung, vorteilhaft sein kann.

Bei einer zweckmäßigen Fortbildung der Vorrichtung sind die Be- und/oder Entladeöffnungen als Schnellauftore, Zick-Zack-Tore, Kipptore und/oder absenkbare oder entfernbare Böden ausgeführt. Diese Art von Tür-/Tormitteln benötigen beim Öffnen und Schließen nur einen geringen Raumbedarf.

Bei einer weiteren bevorzugten Ausführungsform der erfindungsgemäßen Vorrichtung sind die Kabinen mit Lastfördereinrichtungen zum Be- und/oder Entladen der Lasten ausgebildet. Bei dem Transport einschließlich dem Be- und Entladen von fertiggestellten Fahrzeugen wird dadurch kein Eigenantrieb der Fahrzeuge benötigt. Die Lastfördereinrichtungen der Kabinen können in vorteilhafter Art und Weise auf die zu transportierenden Lasten abgestimmt sein, wodurch in den Be- und Entladestationen keine oder keine speziell an die Lasten angepaßten Fördermittel vorgesehen sein müssen. Wenn im wesentlichen gleichartige Lasten transportiert werden, können die Lastfördereinrichtungen der Kabine auch mit Fördermitteln der Be- und/oder Entladestationen ein Be- und/oder Entladesystem bilden, das eine besonders effiziente, gegebenenfalls vollkommen automatisierte Be- und/oder Entladung ermöglicht.

Gemäß einer besonders bevorzugten Ausgestaltung der erfindungsgemäßen Vorrichtung, für die gesondert um Schutz nachgesucht wird, sind an den Kabinen jeweils Anschlußeinrichtungen vorgesehen, über welche die Kabinen in der ersten Station und/oder der zweiten Station mit einer äußeren Energieversorgung in Verbindung bringbar sind.

Auf der Strecke zwischen Be- und/oder Entladestationen sind zur Funktion der Kabinen, d.h. zum Transportieren von Lasten, keinerlei Antriebe oder sonstige elektrische und steuerungstechnische Einrichtungen an der Kabine bzw. Trageinrichtung selbst notwendig. Einrichtungen wie Sprinkler, Heizungs- und Belüftungsanlagen etc. sind nur in den Be- und/oder Entladestationen notwendig. Durch die Anschlußmittel können an den Kabinen von außen betriebene Vorrichtungen wie Öffnungs/Schließeinrichtungen, Beleuchtungsmittel, Sicherheits-, Verriegelungseinrichtungen oder Lastfördereinrichtungen, deren Betrieb bzw. Funktion oder Zustandssteuerung nur in den Beund/oder Entladestationen erfolgt, vorgesehen werden, ohne das auf der Strecke eine ständige Energieversorgung zu gewährleisten ist, d.h. Energieversorgungsmittel entlang der Strecke zu führen sind.

Bei einer vorteilhaften Weiterbildung der Vorrichtung werden die Kabinen mittels eines in der ersten und/oder zweiten Station angeordneten Hubtisches über die Anschlußeinrichtungen mit der äußeren Energieversorgung verbunden. Der Hubtisch führt eine Vertikalbewegung aus, die im wesentlichen senkrecht zu der allgemeinen Richtung der Fortbewegung ist. Durch den Hubtisch, d.h. dem Stützen von unten, werden die Kabinen außerdem fest und sicher gehalten, wodurch ein lagestabiler Zustand zum Be- und/oder Entladen geschaffen wird.

Bei einer weiteren Fortbildung der Vorrichtung umfaßt der Hubtisch eine Zentriereinrichtung zum Positionieren der Kabinen. Das Verbinden mit einer äußeren Energieversorgung und ein genaues Positionieren der Kabine erfolgt somit in einem Arbeitsschritt.

Bei einer weiteren Ausführungsform sind Mittel zum Umsetzen des Fahrwerkes mit den Kabinen von dem Tragseil bzw. der Tragschiene auf ein anderes Tragseil bzw. eine andere Tragschiene vorgesehen. In vorteilhafter Art und Weise können Trageinrichtungen bzw. Kabinen auf mehreren verschiedenen Tragseilen bzw. Tragschienen bewegt werden, um so Lasten über ein aus Tragseilen bzw. Tragschienen aufgebautes Streckennetz zu transportieren. Durch das Umsetzten von Kabinen kann bei Verwendung von zwei Tragseilen und einem Zugseil ein umlaufähnlicher Betrieb erreicht werden.

Bei einer vorteilhaften Ausgestaltung des erfindungsgemäßen Verfahrens zum Betreiben einer Vorrichtung zum Transport von Lasten zwischen der ersten und zweiten Station, insbesondere von fertiggestellten Fahrzeugen, bei dem Kabinen für Lasten mittels eines Fahrwerkes an Tragschienen und/oder Tragseilen abgestützt und geführt und durch ein angetriebenes Zugseil bewegt werden, wobei das Fahrwerk samt Kabinen in der ersten bzw. zweiten Station durch Seilkuppelmittel in das Zugseil ein- und ausgekuppelt wird, wird die Kabine in der ersten bzw. zweiten Station durch Anschlußmittel mit einer äußeren Energieversorgung verbunden, um Lastfördereinrichtungen, Öffnungs/Schließeinrichtungen und/oder ähnliche Einrichtungen der Trageinrichtung, deren Betrieb oder Zustandssteuerung nur in den Be- und/oder Entladestationen erfolgt, über die Energieversorgung anzutreiben.

Die Erfindung ist anhand von Ausführungsbeispielen in den Zeichnungen dargestellt und wird im folgenden unter Bezugnahme auf diese näher erläutert.
- Fig. 1: zeigt in Draufsicht eine erste Ausführungsform der erfindungsgemäßen Vorrichtung,
- Fig. 2: zeigt eine schematische geschnittene Seitenansicht der Kabinen der Vorrichtung gemäß Fig. 1
- Fig. 3: zeigt eine schematische Vorderansicht der Kabinen der Vorrichtung gemäß Fig. 1,
- Fig. 4: zeigt in Draufsicht eine weitere Ausführungsform der erfindungsgemäßen Vorrichtung,
- Fig. 5: zeigt eine Seitenansicht einer bevorzugten Ausgestaltung einer Be- und Entladevorrichtung zum Zuführen fertiggestellter Fahrzeuge oder Abtransport angelieferter Fahrzeuge,
- Fig. 6: zeigt eine Draufsicht auf die Be- und Entladevorrichtung gemäß Fig. 5,
- Fig. 7: zeigt eine Kuppelklemme, wie sie aus der Seil-Hängebahn-Technik bekannt ist.

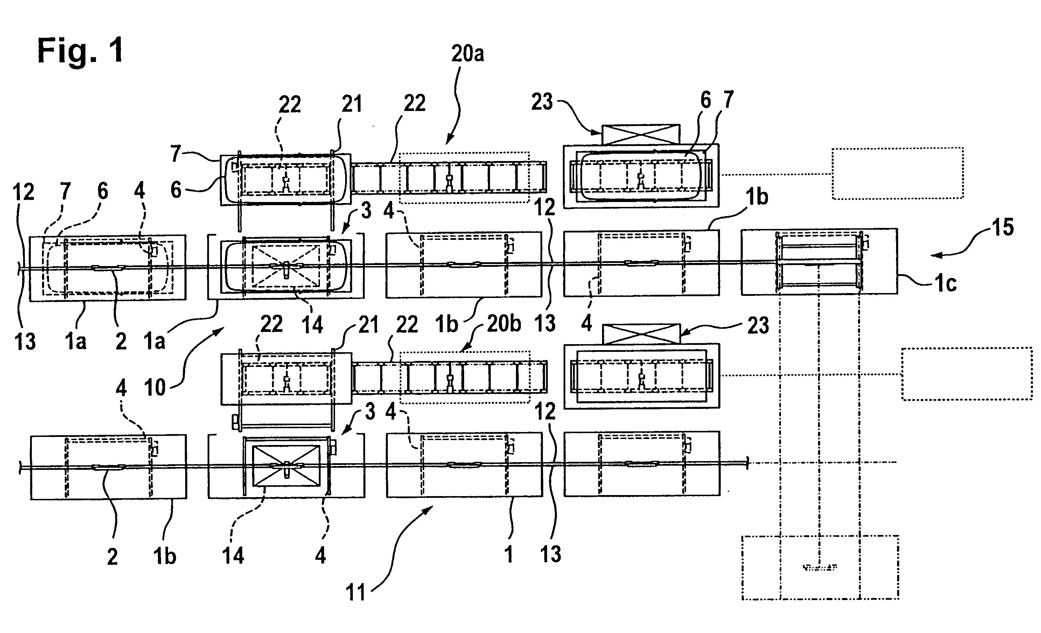

Zunächst werden in einem kurzen Überblick grundlegende Komponenten der in den Fig. 1 bis 7 dargestellten Ausführungsformen der erfindungsgemäßen Vorrichtung beschrieben. Es sei hierbei angemerkt, daß in den Zeichnungen eventuell vorhandene Bemaßungen oder Details rein beispielhaft angegeben sind und in keiner Weise den Offenbarungsgehalt der Zeichnungen einschränken sollen.

Fig. 1 zeigt in Draufsicht eine erste Ausführungsform der erfindungsgemäßen Vorrichtung, wobei mehrere Kabinen 1 in einer Be- und/oder Entladestation mit einer zugehörigen Be- und Entladevorrichtung 20 bzw. 20b dargestellt sind. In die Be- und Entladestation führen zwei Trassen 10, 11, die Tragseile 12 und Zugseile 13 umfassen. Weiterhin ist eine Umsetzeinrichtung 15 zum Umsetzen von Kabinen 1a, 1b, 1c von der Trasse 10 auf die Trasse 11 vorgesehen.

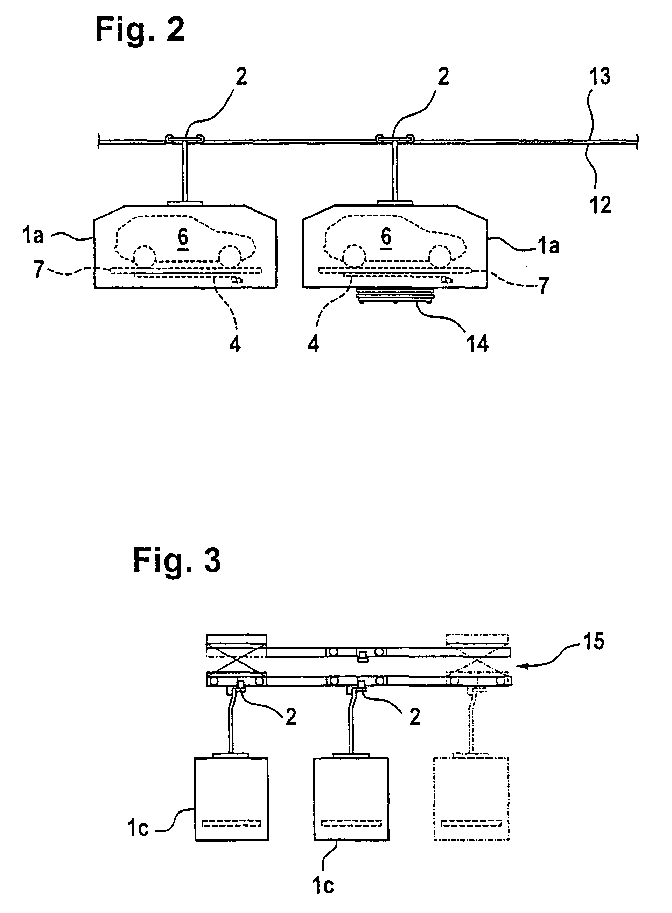

Die Kabinen 1a, 1b, 1c, welche auch als Trageinrichtungen bezeichnet werden können, dienen dazu, Fahrzeuge bzw. Fahrzeugkarosserien 6 zwischen den Be- bzw. Entladevorrichtungen 20a, 20b zu transportieren. Die Kabinen sind hierbei an einem Fahrwerk 2 befestigt, daß von dem Tragseil gestützt und geführt wird. Die Aufhängung der Kabinen 1a, 1b, 1c an dem Tragseil 12 mittels des Fahrwerks 2 wird insbesondere anhand der Figuren 2 und 3 deutlich. Wie in diesen Figuren gezeigt ist, ist das Fahrwerk 2 ähnlich der an sich bekannten Seil-Hängebahntechnik über das Tragseil 12 (oder auch eine nicht dargestellte Tragschiene) abgestützt und geführt. Das Tragseil kann über ausreichend dimensionierte Tragpfeiler (nicht dargestellt) oder auch über eine abgehängte Deckenkonstruktion bzw. Stahlunterkonstruktion auftretende Kräfte und Lasten abführen.

Zur Förderung der Kabinen 1 wird das Zugseil 13 verwendet. Entgegen dem stationären Tragseil 12, welches beispielsweise in den Stationen mittels (nicht dargestellter) Spanngewichte gespannt bzw. unter Spannung Tragschienen befestigt wird, ist das Zugseil 13 als Endlosseil in einem geschlossenen Kreislauf ausgeführt. Hierbei wird es in den Stationen und an den (nicht dargestellten) Tragpfeilern über (nicht dargestellte) Umlenkrossen bzw. Stützrollen gespannt geführt und in (nicht dargestellten) Antriebs- und Spannstationen angetrieben bzw. gespannt. Die Anzahl der notwendigen Antriebe zur Förderung - der Kabinen 1a, 1b, 1c wird hierdurch auf ein Minimum reduziert, wobei im allgemeinen zum Antrieb des Zugseils 13 nur ein Antriebsmotor notwendig ist. Ferner erweist sich zum automatischen Spannen des Zugseils in der Regel ein Spannantrieb als ausreichend.

Zwischen den Be- und Entladestationen 20a, 20b ist eine kontinuierliche und gemeinsame Bewegung der Kabinen 1a, 1b, 1c über das angetriebene Zugseil realisierbar. Dabei ist sowohl ein kreislaufähnlicher Umlaufbetrieb mit zwei voneinander unabhängigen Tragseilen 12 und einem Endlosseil 13, also die in Fig. 1 gezeigte doppelte bzw. parallele Trassenführung 10, 11 möglich, als auch ein (nicht dargestellter) Pendelbetrieb zwischen den Stationen mit einem Tragseil 12 und einem Endloszugseil 13. Bei dem Pendelbetrieb wird beispielsweise lediglich eine Kabine zwischen den Bahnhöfen hin- und herbewegt. Dazu wird der Antrieb in der Antriebsstation des Zugseils 13 umkehrbar ausgeführt.

In Fig. 1 erkennt man, daß die Kabinen 1a aufgereiht im sogenannten Aufpufferbetrieb in der Beladestation 20a aufgereiht sind. Auf den jeweiligen Trassen 10, 11, sind jeweils 4 Kabinen dargestellt. Auf der Trasse 10 sind zwei beladene Kabinen 1a in Warteposition zur Be- und Entladestation 20a dargestellt, wobei Bezugszeichen 1b eine leere Kabine bezeichnet.

Zum Be- oder Entladen wird eine Kabine von dem Zugseil 13 abgekoppelt, wie weiter unten im einzelnen noch ausführlich erläutert wird. Eine ausgekuppelte Kabine 1a wird, wie insbesondere in Fig. 2 deutlich wird, über einem Hubtisch 14 gestoppt und durch Hochfahren eines Hubtisch-Oberteils mit Zentriereinrichtungen positioniert und über (nicht dargestellte) Anschlußmittel, beispielsweise elektrische oder hydraulische Anschlußmittel, mit einer äußeren Energiequelle verbunden. Einrichtungen zum Schließen oder Öffnen von schematisch dargestellten seitlichen Beladungs- und Entladeöffnungen 3 der Kabine (siehe Fig. 1), und in der Kabine 1a angeordnete Lastfördereinrichtungen 4 sind über die (nicht dargestellte) äußere Energiequelle antreibbar.

Es wird nun der Belade- und Entladevorgang beispielhaft anhand der Figuren 1 bis 3 beschrieben. Hierbei wird zunächst die Belade- und Entladeöffnung 3 der Kabine 1a geöffnet, und das sich im Kabineninneren befindliche, fertiggestellte Fahrzeug 6 wird mittels der in der Kabine 1a befindlichen Lastfördereinrichtung 4 aus der Kabine 1a gefördert. Die Lastfördereinrichtung 4 kann beispielsweise als Rollenbahn bzw. Kettenförderer ausgebildet sein. Es können selbstverständlich alle dem Fachmann bekannten und geeigneten Fördertechniken zum Einsatz kommen, auch bewegungslose Lastfördereinrichtungen wie Kamm, Kragarm usw. Bei Einsatz von bewegungslosen Lasttragmitteln, wie beispielsweise Paletten, kann das Transportgut auch durch Verwendung von auf das bewegungslose Lasttragmittel abgestimmten Einrichtungen wie Heber, Regelbediengerät mit Teleskop oder Satellit entnommen werden.

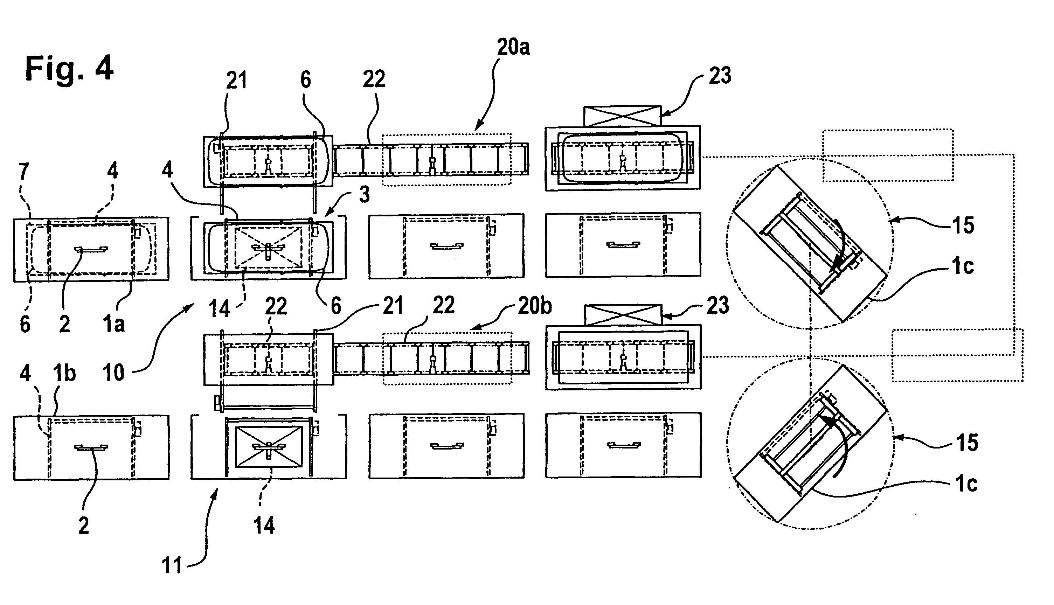

In der Fig. 1 (sowie in der weiter unten im einzelnen beschriebenen Fig. 4) ist das Fahrzeug 6 auf einem Lastträger, beispielsweise einer Palette 7, positioniert. Über eine Rollenbahn oder Kettenförderer 4 der Kabine 1a wird die Palette zusammen mit dem Fahrzeug 6 durch die Öffnung 3 aus der Kabine 1 ausgefahren. Über eine Belade- und Entladeeinrichtung 21 und eine Fördereinrichtung 22 mit den Funktionen Eckumsetzung, Quer- und Längsförderung sowie Drehung wird die Palette 7 zusammen mit dem Fahrzeug 6 in eine Hebeeinrichtung 23 eingeschleust.

Nach dem Absetzen auf die Hebeeinrichtung 23 wird der Lastverbund aus Palette 7 und Fahrzeug 6 aus der Hebeeinrichtung 23 ausgefördert und auf einem nachgeschalteten (nicht dargestellten) Förderer derart positioniert, daß entweder manuell durch einen Bediener oder durch eine automatisierte Abnahme die Palette 7 und das Fahrzeug 6 getrennt werden können.

Zweckmäßigerweise verbleibt die leere Palette 7 auf der Fördertechnik und wird je nach Bedarfsfall über weitere Förderer unter Verwendung der Hebeeinrichtung 23 angehoben und einem Rückführkreislauf zugeführt.

Es ist beispielsweise denkbar, die Kabine 1a mit der leeren Palette 7 zu beladen. Es ist auch denkbar, daß nach der manuellen oder automatisierten Trennung von Fahrzeug 6 und Palette 7 die Palette in einer nachfolgenden Station mit einer anderen Last bzw. einem anderen Fahrzeug wiederbeladen wird und dem Förderkreislauf zugeführt wird.

Nach der Entnahme des Fahrzeugs 6 aus der Kabine wird die leere Kabine (nun als 1b bezeichnet) auf den nachfolgenden Platz weitergetaktet, um danach der Umsetzeinrichtung 15 zugeführt zu werden. Die Umsetzeinrichtung 15 setzt die Kabine von der Achse des einen Tragseils 12 der Trasse 10 auf die Achse des Tragseils 12 der zweiten Trasse 11.

Zweckmäßigerweise ist die Umsetzeinrichtung 15 als abgehängte Umsetzeinrichtung ausgebildet. In diesem Zusammenhang zeigt Fig. 3 eine Vorderansicht der Kabinen (hier als Kabinen 1c bezeichnet) beim Umsetzvorgang. Als Umsetzeinrichtungen 15 können beispielsweise Querketten bzw. Quergutförderer als bodengebundene Fördertechnik, Umlauf-Shuttle-Systeme, Eckdrehstationen oder aber auch Karusselldrehscheiben als abgehängte oder aufgeständerte Fördertechnik, aber auch jedwede andere geeignete Einrichtung benutzt werden.

Wie ferner in Fig. 1 gezeigt ist, wird die leere Kabine 1b nach der Umsetzung mittels eines (nicht dargestellten) Reibradantriebes oder dergleichen weitergetaktet, bis die Kabine vor der Belade- bzw. Entladeeinrichtung 21 positioniert ist. Auch hier wird die Kabine zweckmäßigerweise mittels eines Hubtisches 14 angehoben, zentriert und über die (nicht dargestellten) Anschlußmittel mit einer äußeren Energieversorgung verbunden.

Über die Be- und/oder Entladevorrichtung 20b und die Lastfördereinrichtung 4 kann Transportgut in eine leere Kabine eingebracht werden. Die Belade- und Entladeöffnungen der Kabine werden anschließend geschlossen, die Verbindung mit der äußeren Energiequelle durch Absenken des Hubtisches wird gelöst und die Kabine weitergetaktet. Die Kabinen sind auf der Wegstrecke zwischen den Stationen stromlos gesetzt.

Anhand der Figur 4 wird nun eine weitere Ausführungsform der erfindungsgemäßen Vorrichtung beschrieben. Die Vorrichtung der Figur 4 zeigt gegenüber derjenigen der Figur 1 eine modifiziert ausgebildete Umsetzeinrichtung 15, die hier als Karusselldrehscheibe ausgebildet ist. Im übrigen entspricht die Ausführungsform der Fig. 4 im wesentlichen derjenigen der Fig. 1.

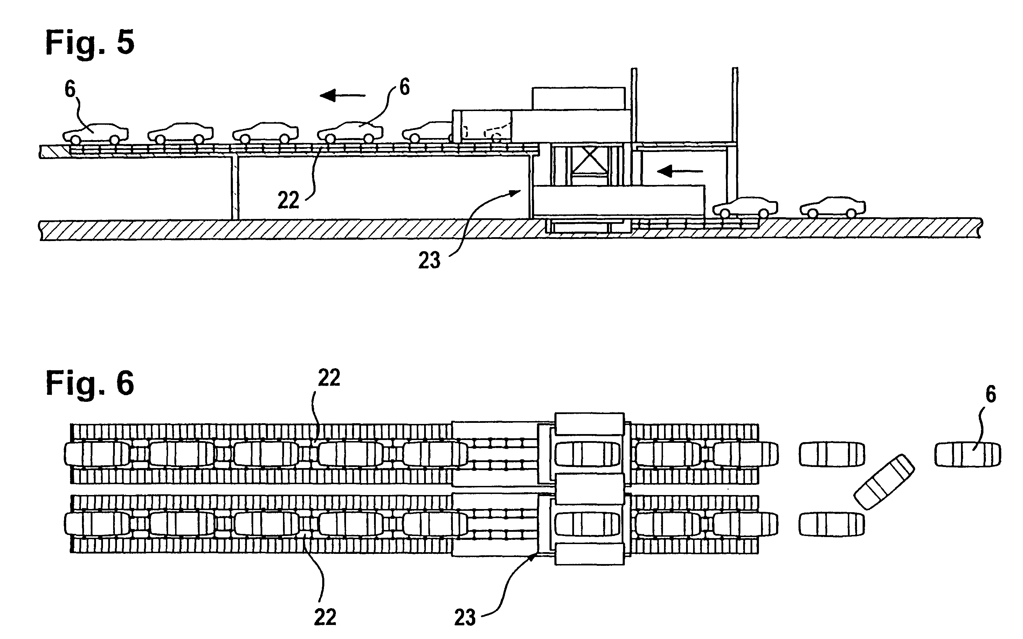

Die Figuren 5 und 6 zeigen die Belade- und Entladevorrichtung 20a bzw. 20b zum Zuführen fertiggestellter Fahrzeuge oder zum Abtransport angelieferter Fahrzeuge in Seitenansicht bzw. Draufsicht. Man erkennt hier im einzelnen die Hebeeinrichtung 23, die Fördereinrichtung 22 und die Belade- und Entlademittel 21. Wie bereits erwähnt, werden über die Hebeeinrichtung 23 Fahrzeuge 6 auf das Höhenniveau der Kabinen 1a, 1b, 1c gehoben bzw. auf Bodenniveau abgesenkt und durch die Fördereinrichtung 22 von oder zu der Belade- und Entladeeinrichtung 21 transportiert. Die Einrichtung 21 ist vorzugsweise auf Lastfördereinrichtungen 4 innerhalb der Kabinen abgestimmt. Mittels der Einrichtung 21 und/oder der Lastfördereinrichtungen 4 können die Kabinen be- und entladen werden. Wie insbesondere aus Fig. 6 deutlich wird, können zur Bereitstellung einer erhöhten Förderkapazität auch zwei parallele Förderlinien in Nebeneinanderanordnung vorgesehen sein.

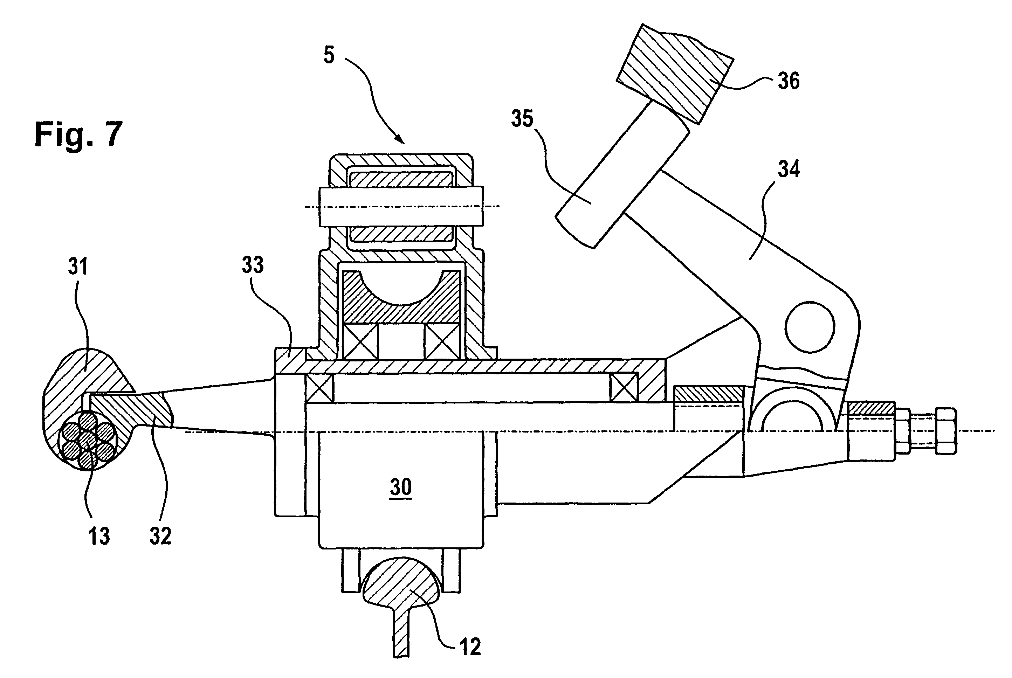

Es erweist sich als zweckmäßig, in den Stationen zur Gewährleistung einer einfachen Be- und Entladung der einzelnen Kabinen, eine voneinander unabhängige Bewegung der Kabinen zu ermöglichen. Dies wird zweckmäßigerweise durch eine wahlweise Kopplung bzw. Entkopplung der Kabinen bezüglich des Zugseils 13 realisiert. Eine vorteilhafte Möglichkeit zur Realisierung einer derartigen Kopplung/Entkopplung wird nun anhand der Fig. 7 erläutert.

In Fig. 7 ist als Seilkupplungsmittel eine an sich aus der Seilbahntechnik bekannte Kuppelklemme darstellt, mittels der das Fahrwerk 2 mit den Kabinen 1a, 1b, 1c in das Zugseil 13 eingekuppelt bzw. von diesem ausgekuppelt werden kann.

Die Kuppelklemme 5 ist an einem Abschnitt 30 des Fahrwerks 2 befestigt, wie in Fig. 7 dargestellt ist. Die Kuppelklemme umfaßt ein Gehäuse 33, eine feste Klemmbacke 31, eine bewegliche Klemmbacke 32 und einen Steuerhebel 34 mit Rollen 35.

Die bewegliche Klemmbacke 32 ist in dem Gehäuse 33 beweglich gelagert und wird mittels Federkraft gegen die feste Klemmbakke 31 gedrückt. Das Zugseil 13 wird in den Klemmbacken 31, 32 über die aufgebrachte Federkraft klemmend gehalten. Bei Einfahren der Kabine 1 in eine Belade- und/oder Entladestation wird der Steuerhebel 34 mit der Rolle 35 entlang einer Steuerschiene 36, die fest in der Belade- und/oder Entladestation angebracht ist, geführt. Über die Steuerschiene 36 wird der Steuerhebel 34 so geschwenkt, daß die bewegliche Klemmbacke 32 entgegen der Federkraft verschoben wird und so das Zugseil 13 aus dem Klemmgriff der Klemmbacken 31, 32 freigegeben wird. Die Steuerschiene 36 ist dabei so gestaltet, daß die Kuppelklemme 5 im wesentlichen während der gesamten Bewegung der Kabine in der Belade- und/oder Entladestation nicht in das Zugseil 13 eingekuppelt ist.

## Patentansprüche

1. Vorrichtung zum Transport von fertiggestellten oder teilfertiggestellten Fahrzeugen zwischen einer ersten Station, insbesondere einer Beladestation, und einer zweiten Station, insbesondere einer Entladestation, innerhalb eines Fahrzeug-Produktionsbereiches oder von einem Fahrzeugproduktionsbereich zu einem Kundencenter,
**gekennzeichnet durch**
mittels einer Fördereinrichtung zwischen der ersten Station und der zweiten Station förderbare, allseitig verschließbare Kabinen, in welche die Fahrzeuge zum Transport zwischen der ersten und der zweiten Station einbringbar sind.

2. Vorrichtung nach Anspruch 1, **dadurch gekennzeichnet, daß** die Fördereinrichtung ferner ein Fahrwerk (2) aufweist, wobei die Kabinen an dem Fahrwerk (2) angebracht sind, das Fahrwerk (2) durch Tragseile (12) und/oder Tragschienen gestützt und geführt ist und über ein angetriebenes Zugseil (13) bewegbar ist.

3. Vorrichtung nach Anspruch 2, **dadurch gekennzeichnet, daß** Seilkupplungsmittel (5) vorgesehen sind, um das Fahrwerk (2) mit den Kabinen in der ersten und/oder zweiten Station bezüglich des Zugseils 13 an- und abzukuppeln.

4. Vorrichtung nach einem der vorstehenden Ansprüche, **dadurch gekennzeichnet, daß** die allseitig verschließbare Kabine (1) Be- und/oder Entladeöffnungen (3) aufweist, welche an den Stirnseiten und/oder Breitseiten und/oder am Boden der Kabine (1) vorgesehen sind.

5. Vorrichtung nach einem der vorstehenden Ansprüche, **dadurch gekennzeichnet, daß** die Be- und/oder Entladeöffnungen (3) als Schnelllauftore und/oder Zick-Zack-Tore und/oder Kipptore und/oder absenkbare oder entfernbare Böden ausgeführt sind.

6. Vorrichtung nach einem der vorstehenden Ansprüche, **dadurch gekennzeichnet, daß** die Kabinen (1) mit einer Lastfördereinrichtung (4) zum Be- und/oder Entladen der Lasten ausgebildet sind, wobei die Lastfördereinrichtung (4) insbesondere als Rollenbahn, Kettenförderer, Kamm- oder Kragarm realisiert ist.

7. Vorrichtung nach einem der vorstehenden Ansprüche, **gekennzeichnet durch** an den Kabinen (1) vorgesehene Anschluβeinrichtungen, über welche die Kabinen in der ersten Station und/oder der zweiten Station mit einer äußeren Energieversorgung in Verbindung bringbar ist.

8. Vorrichtung nach Anspruch 7, **dadurch gekennzeichnet, daß** die Kabinen (1) mittels eines in der ersten Station und/oder zweiten Station angeordneten Hubtisches (14) über die Anschlußanrichtungen mit der äußeren Energieversorgung in Verbindung bringbar ist.

9. Vorrichtung nach Anspruch 8, **dadurch gekennzeichnet, daß** der Hubtisch (14) eine Zentriereinrichtung zum Positionieren der Kabine aufweist.

10. Vorrichtung nach einem der vorstehenden Ansprüche, **dadurch gekennzeichnet, daß** Mittel (15) zum Umsetzen des Fahrwerkes (2) mit den Kabinen von dem Tragseil (12) bzw. der Tragschiene auf ein weiteres Tragseil (12) bzw. eine weitere Tragschiene vorgesehen sind.

11. Verfahren zum Transport von fertiggestellten oder teilfertiggestellten Fahrzeugen, , zwischen einer ersten Station, insbesondere einer Beladestation, und einer zweiten Station, insbesondere einer Entladestation innerhalb eines Fahrzeug-Produktionsbereiches oder von einem Fahrzeug-Produktionsbereich zu einem Kundencenter,
**dadurch gekennzeichnet,**
**daß** die Fahrzeuge in allseitig verschließbare Kabinen einer Fördereinrichtung eingebracht werden, mittels derer sie von der ersten Station in die zweite Station gefördert werden.

12. Verfahren nach Anspruch 11, bei dem die Kabinen (1) mittels eines Fahrwerks an Tragschienen und/oder Tragseilen (12) abgestützt und geführt und durch ein angetriebenes Zugseil (13) bewegt wird, wobei das Fahrwerk (2) zusammen mit den Kabinen (1) in der ersten Station und/oder der zweiten Station durch Seilkupplungsmittel (5) in das Zugseil (13) ein- bzw. ausgekuppelt wird, und wobei die Kabinen (1) in der ersten Station und/oder der zweiten Station durch Anschlußmittel mit einer äußeren Energieversorgung verbunden werden, um Lastfördereinrichtungen (4), Öffnungs/Schließeinrichtungen und/oder ähnliche Einrichtungen der Kabinen, deren Betrieb oder Zustandssteuerung nur in der ersten Station und/oder der zweiten Station erfolgen soll, über die Energieversorgung anzutreiben.

13. Verfahren nach Anspruch 12, **dadurch gekennzeichnet, daß** die Kabinen zum Ankoppeln an die Energieversorgung angehalten und nach oben angehoben werden.

14. Verfahren nach Anspruch 13, **dadurch gekennzeichnet, daß** die Kabinen beim Anheben zum Abkuppeln an die Energieversorgung positioniert werden.

## Claims

1. Equipment for transporting finished or semi-finished vehicles between a first station, particularly a loading station, and a second station, particularly an unloading station, within a vehicle production area or from a vehicle production area to a customer centre, **characterised by** cabins which can be conveyed by means of a conveying apparatus between the first station and the second station, and which can be closed off on all sides, into which the vehicles can be placed for transporting them between the first and second stations.

2. Equipment according to claim 1, **characterised in that** the conveying apparatus further comprises a bogie assembly (2), wherein the cabins are mounted on the bogie assembly (2), the bogie assembly (2) is supported and guided by carrying cables (12) and/or carrying rails and is movable by means of a driven traction cable (13).

3. Equipment according to claim 2, **characterised in that** cable coupling means (5) are provided for coupling and uncoupling the bogie assembly (2), together with the cabins, to and from the traction cable 13 in the first and/or second station.

4. Equipment according to one of the preceding claims, **characterised in that** the cabin (1) which can be closed off on all sides comprises loading and unloading openings (3) which are provided at the ends and/or at the sides and/or on the bottom of the cabin (1).

5. Equipment according to one of the preceding claims, **characterised in that** the loading and unloading openings (3) are fast-operating doors and/or concertina doors and/or up-and-over doors and/or floors which can be lowered or removed.

6. Equipment according to one of the preceding claims, **characterised in that** the cabins (1) are constructed with a load conveying apparatus (4) for loading and/or unloading the loads, the load conveying apparatus (4) being constructed in particular as a rolling track, chain conveyor, rack arm or crane jib.

7. Equipment according to one of the preceding claims, **characterised by** connecting means provided on the cabins (1), by which the cabins in the first station and/or the second station can be connected to an external energy supply.

8. Equipment according to claim 7, **characterised in that** the cabins (1) may be connected to the external energy supply, via the connecting means, by means of a lifting platform (14) mounted in the first station and/or second station.

9. Equipment according to claim 8, **characterised in that** the lifting platform (14) has centring means for positioning the cabin.

10. Equipment according to one of the preceding claims, **characterised in that** means (15) are provided for transferring the bogie assembly (2) with the cabins from the support cable (12) or support rail to another support cable (12) or another support rail.

11. Method of transporting finished or semi-finished vehicles between a first station, particularly a loading station, and a second station, particularly an unloading station, within a vehicle production area or from a vehicle production area to a customer centre,
**characterised in that** the vehicles are placed in cabins which can be closed off on all sides on a conveying apparatus by means of which the vehicles are conveyed from the first station to the second station.

12. Method according to claim 11, wherein the cabins (1) are supported and guided on carrying rails and/or support cables (12) by means of a bogie assembly and are moved by a driven traction cable (13), the bogie assembly (2) together with the cabins (1) being coupled to or uncoupled from the traction cable (13) in the first station and/or the second station by cable coupling means (5), the cabins (1) in the first station and/or the second station being connected to an external energy supply by connecting means, in order to use the energy supply to drive load conveying apparatus (4), opening/closing devices and/or similar apparatus of the cabins, the operation or control of which is intended to be carried out only in the first station and/or the second station.

13. Method according to claim 12, **characterised in that** for coupling to the energy supply the cabins are stopped and lifted upwards.

14. Method according to claim 13, **characterised in that** as they are raised the cabins are positioned close to the energy supply for uncoupling.

## Revendications

1. Dispositif de transport de véhicules finis ou partiellement finis entre une première station, en particulier une station de chargement, et une deuxième station, en particulier une station de déchargement, à l'intérieur dune zone de production de véhicules ou depuis une zone de production jusqu'à un centre clients, **caractérisé par** des cabines susceptibles d'être fermées de tous les côtés et transportables au moyen d'un système de transport entre la première station et la deuxième station, dans lesquelles on peut placer les véhicules pour le transport entre la première station et la deuxième station.

2. Dispositif selon la revendication 1, **caractérisé en ce que** le système de transport présente en outre un mécanisme de déplacement (2), les cabines étant montées sur le mécanisme de déplacement (2), le mécanisme de déplacement (2) étant soutenu et guidé par des câbles porteurs (12) et/ou par des rails porteurs et étant déplaçable via un câble de traction (13) entraîné.

3. Dispositif selon la revendication 2, **caractérisé en ce qu'**il est prévu des moyens d'accouplement pour câbles (5) pour accoupler et découpler le mécanisme de déplacement (2) avec les cabines par rapport au câble de traction (13) dans la première et/ou dans la deuxième station.

4. Dispositif selon l'une des revendications précédentes, **caractérisé en ce que** la cabine (1) susceptible d'être fermée de tous les côtés présente des ouvertures de chargement et/ou de déchargement (3) qui sont prévues sur les faces frontales et/ou sur les côtés larges et/ou sur le fond de la cabine (1).

5. Dispositif selon l'une des revendications précédentes, **caractérisé en ce que** les ouvertures de chargement et/ou de déchargement (3) sont réalisées sous forme de portes à ouverture rapide et/ou de portes en zigzag et/ou de portes basculantes et/ou de fond escamotable ou démontable.

6. Dispositif selon l'une des revendications précédentes, **caractérisé en ce que** les cabines (1) sont réalisées avec un système de transport de charge (4) pour charger et/ou décharger les charges, le système de transport de charge (4) étant réalisé en particulier sous forme de transporteur à rouleaux, de transporteur à chaînes, de bras à peignes ou de bras en porte-à-faux.

7. Dispositif selon l'une des revendications précédentes, **caractérisé par** des systèmes de connexion prévus sur les cabines (1), via lesquels les cabines peuvent être reliées à une alimentation en énergie extérieure dans la première station et/ou dans la deuxième station.

8. Dispositif selon la revendication 7, **caractérisé en ce que** les cabines (1) peuvent être reliées à l'alimentation en énergie extérieure au moyen d'une table élévatrice (14) agencée dans la première station et/ou dans la deuxième station, via les systèmes de connexion.

9. Dispositif selon la revendication 8, **caractérisé en ce que** la table élévatrice (14) présente un dispositif de centrage pour positionner la cabine.

10. Dispositif selon l'une des revendications précédentes, **caractérisé en ce qu'**il est prévu des moyens (15) pour transférer le mécanisme de déplacement (2) avec les cabines depuis le câble porteur (12) ou le rail porteur vers un autre câble porteur (12) ou un autre rail porteur.

11. Procédé de transport de véhicules finis ou partiellement finis entre une première station, en particulier une station de chargement, et une deuxième station, en particulier une station de déchargement, à l'intérieur d'une zone de production de véhicules ou depuis une zone de production jusqu'à un centre clients, **caractérisé en ce que** les véhicules sont placés dans des cabines susceptibles d'être fermées de tous les côtés, d'un système de transport, au moyen desquelles les véhicules sont transportés depuis la première station jusqu'à la deuxième station.

12. Procédé selon la revendication 11, dans lequel les cabines (1) sont soutenues et guidées sur des rails porteurs et/ou des câbles porteurs (12) et sont déplaçables via un câble de traction entraîné, le mécanisme de déplacement (2) étant accouplé et découplé, respectivement, au câble de traction (13) conjointement avec les cabines (1) dans la première station et/ou dans la deuxième station par des moyens d'accouplement de câble (5), et les cabines (1) étant reliées à une alimentation en énergie extérieure dans la première station et/ou dans la deuxième station par des moyens de connexion, pour faire entraîner via l'alimentation en énergie des systèmes de transport de charge (4), des systèmes d'ouverture/de fermeture et/ou des systèmes similaires des cabines, dont le fonctionnement ou la commande d'état ne doit avoir lieu que dans la première station et/ou que dans la deuxième station.

13. Procédé selon la revendication 12, **caractérisé en ce que** les cabines sont arrêtées et soulevées vers le haut pour être accouplées à l'alimentation en énergie.

14. Procédé selon la revendication 13, **caractérisé en ce que** les cabines sont positionnées lorsqu'elles sont soulevées pour être découplées de l'alimentation en énergie.
